# EUROPEAN PATENT APPLICATION

(11) **EP 4 654 220 A1**
(43) Date of publication of application: **26.11.2025**
(21) Application number: 23901751.0
(22) Date of filing: 20.10.2023
(51) Int. Cl.: G21F 9/30, C03B 5/00

(54) **RADIOACTIVE WASTE SUPPLYING DEVICE**

(30) Priority: 16.01.2023 KR 20230006126
(71) Applicant: Korea Hydro & Nuclear Power Co., Ltd, Gyeongju-si, Gyeongsangbuk-do 38120 (KR)
(72) Inventor: HWANG, Seok Ju, Daejeon 34101 (KR); HWANG, Young Hwan, Daejeon 34101 (KR); KIM, Si Young, Daejeon 34101 (KR); KIM, Cheon Woo, Daejeon 34101 (KR)
(74) Representative: Glawe, Delfs, Moll
(86) International application number: PCT/KR2023/016363
(87) International publication number: WO 2024/154898

(57) **Abstract**

Disclosed herein is a radioactive waste supply device used in a radioactive waste vitrification facility for vitirifying radioactive waste. The radioactive waste supply device may supply radioactive waste to a vitrification melter, and may include: a main supply pipe including one end and the other end and supplying the radioactive waste from the other end toward the one end, the one end facing the vitrification melter; a sub-supply pipe including one side and the other side and disposed in the main supply pipe so that the one side is adjacent to the one end; and a dispersing portion positioned on the one side of the sub-supply pipe and allowing the radioactive waste passing through the sub-supply pipe to be dispersed and injected into the vitrification melter.

## Description

### [Technical Field]

The present disclosure relates to a supply device that supplies radioactive waste to a vitrification melter, and more particularly, to a radioactive waste supply device capable of allowing radioactive waste to be dispersed and supplied into a melter and preventing the radioactive waste from remaining in a supply pipe.

### [Background Art]

It is a very important issue to more reliably treat, store, and manage waste, particularly, hazardous waste such as radioactive waste. A method of treating waste using glass among waste treatment and storage methods is called vitrification of waste, which may be said to be a method of permanently isolating radioactive waste, sludge, contaminated soil, industrial waste, or the like, by confining the radioactive waste, the sludge, the contaminated soil, the industrial waste, or the like, in a glass structure and preventing the radioactive waste, the sludge, the contaminated soil, the industrial waste, or the like, from leaching into the surrounding environment.

In general, a waste vitrification device melts a glass former and waste in a melter, exhausts a volatile component in the waste by an off-gas treatment process, applies heat so that toxic substances such as radionuclides or heavy metals become a portion of a glass network structure, provides residence time until a homogeneous molten glass mixture is formed, and then discharges a glass melt to form a glass solidified body, in order to vitrify the waste.

There are various types of melters depending on a heating method. Among them, a cold crucible induction melter (CCIM) includes a cylindrical melting chamber in which an electrical insulator is inserted between a plurality of metal sectors through which cooling water circulates and a high-frequency induction coil provided outside the cylindrical melting chamber, as main components, and melts materials (e.g., waste and glass) in the cylindrical melting chamber by a high-frequency current applied to the high-frequency induction coil.

When the radioactive waste is injected into the melter, it is necessary for the radioactive waste to be uniformly supplied. Otherwise, the melting of the radioactive waste within the melter may become heterogeneous.

### [Disclosure]

### [Technical Problem]

Aspects of the present disclosure provide a radioactive waste supply device that allows radioactive waste to be dispersed and supplied into a melter and prevents the radioactive waste from remaining in a supply pipe.

However, aspects of the present disclosure are not restricted to those set forth herein. The above and other aspects of the present disclosure will become more apparent to one of ordinary skill in the art to which the present disclosure pertains by referencing the detailed description of the present disclosure given below.

### [Technical Solution]

According to an aspect of the present disclosure, there is provided a radioactive waste supply device that supplies radioactive waste to a vitrification melter, including: a main supply pipe including one end and the other end and supplying the radioactive waste from the other end toward the one end, the one end facing the vitrification melter; a sub-supply pipe including one side and the other side and disposed in the main supply pipe so that the one side is adjacent to the one end; and a dispersing portion positioned on the one side of the sub-supply pipe and allowing the radioactive waste passing through the sub-supply pipe to be dispersed and injected into the vitrification melter.

The dispersing portion may include a dispersing structure and a support portion extending from the dispersing structure and fixed to an inner diameter of the sub-supply pipe.

The support portion may be fixed to the inner diameter of the sub-supply pipe so that the dispersing structure is positioned at a central portion of the sub-supply pipe.

The sub-supply pipe may rotate within the main supply pipe.

The sub-supply pipe may include a first gear portion positioned on the other side, and the main supply pipe may include a second gear portion providing power to the first gear portion.

The first gear portion may be a ring gear, and the second gear portion may be a pinion gear.

The radioactive waste supply device may further include a driving motor providing power to the second gear portion.

The main supply pipe may further include a bearing portion, and the bearing portion may be positioned on an inner diameter of the main supply pipe and be in contact with an outer diameter of the sub-supply pipe.

The radioactive waste supply device may further include a permanent observation portion for observing a supply state of the radioactive waste, wherein the permanent observation portion may include a first glass window positioned on a side portion of the main supply pipe and a first observation camera observing the inside of the main supply pipe through the first glass window.

The radioactive waste supply device may further include an auxiliary observation portion for observing a supply state of the radioactive waste, wherein the auxiliary observation portion may include a second glass window positioned on the other end of the main supply pipe and a second observation camera observing the inside of the main supply pipe through the second glass window.

Detailed contents of other embodiments are described in a detailed description and are illustrated in the drawings.

### [Advantageous Effects]

According to the present disclosure, a radioactive waste supply device that allows radioactive waste to be dispersed and supplied into a melter and prevents the radioactive waste from remaining in a supply pipe is provided.

### [Description of Drawings]

FIG. 1 illustrates a radioactive waste vitrification facility to which a radioactive waste supply device according to an embodiment of the present disclosure is applied;
FIG. 2 is a cross-sectional view of the radioactive waste supply device according to an embodiment of the present disclosure;
FIG. 3 illustrates a portion of the radioactive waste supply device according to an embodiment of the present disclosure; and
FIG. 4 illustrates a gear portion of the radioactive waste supply device according to an embodiment of the present disclosure.

### [Mode for Invention]

The present disclosure provides a radioactive waste supply device including a main supply pipe including one end and the other end and supplying radioactive waste from the other end toward the one end, the one end facing the vitrification melter; a sub-supply pipe including one side and the other side and disposed in the main supply pipe so that the one side is adjacent to the one end; and a dispersing portion positioned on the one side of the sub-supply pipe and allowing the radioactive waste passing through the sub-supply pipe to be dispersed and injected into the vitrification melter.

Hereinafter, embodiments of the present disclosure will be described in detail with reference to the accompanying drawings. Advantages and features of the present disclosure and methods for accomplishing these advantages and features will become apparent from embodiments to be described later in detail with reference to the accompanying drawings. However, the present disclosure is not limited to embodiments to be disclosed below, but may be implemented in various different forms, these embodiments will be provided only in order to make the present disclosure complete and allow one of ordinary skill in the art to completely recognize the scope of the present disclosure, and the present disclosure will be defined by the scope of the claims. Throughout the specification, the same components will be denoted by the same reference numerals.

Hereinafter, a radioactive waste supply device according to an embodiment of the present disclosure will be described.

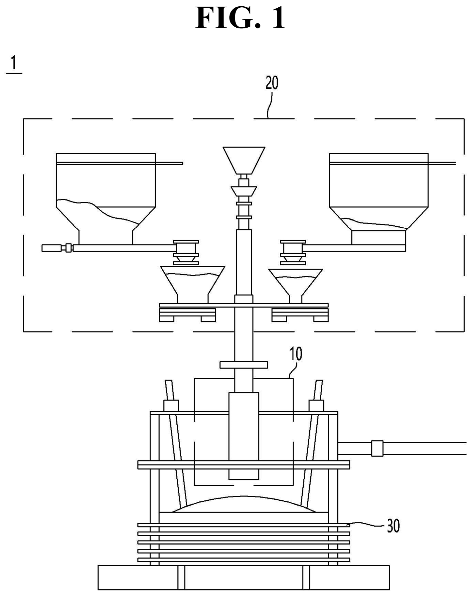

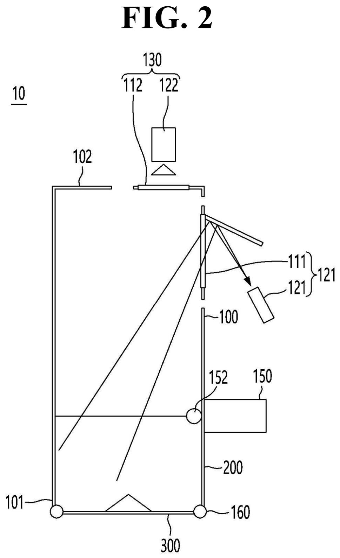

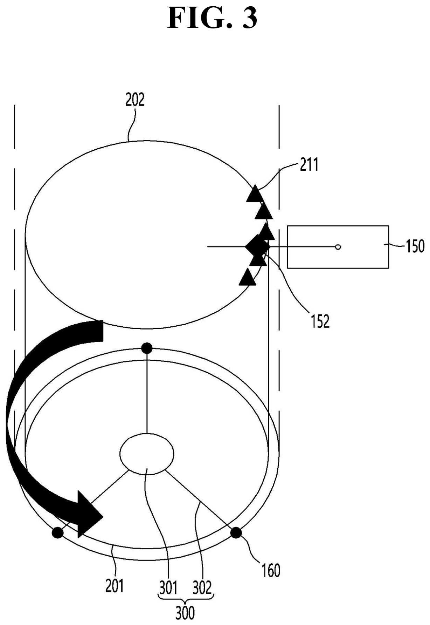

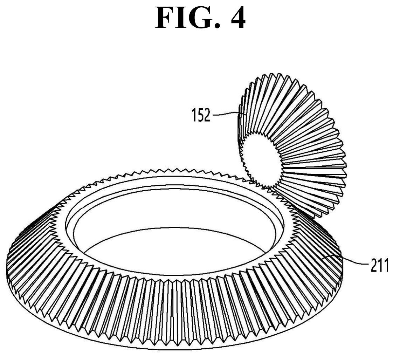

FIG. 1 illustrates a radioactive waste vitrification facility to which a radioactive waste supply device according to an embodiment of the present disclosure is applied, FIG. 2 is a cross-sectional view of the radioactive waste supply device according to an embodiment of the present disclosure, FIG. 3 illustrates a portion of the radioactive waste supply device according to an embodiment of the present disclosure, and FIG. 4 illustrates a gear portion of the radioactive waste supply device according to an embodiment of the present disclosure.

First, the radioactive waste vitrification facility 1 to which the radioactive waste supply device 10 according to an embodiment of the present disclosure is applied will be described below with reference to FIG. 1.

The radioactive waste vitrification facility 1 may include a radioactive waste storage portion 20, the radioactive waste supply device 10, and a vitrification melter 30.

The radioactive waste vitrification facility 1 is a facility that more safely treats radioactive waste, and may not only dramatically reduce a volume of low and intermediate-level radioactive waste, but also minimize the leakage of a radioactive material into the surroundings in any environment to significantly improve safety of radioactive waste treatment.

The radioactive waste vitrification facility 1 may not only fundamentally block the leakage of a radioactive material into an environment, but also may significantly reduce a volume of radioactive waste by bonding the radioactive waste to a glass structure. Vitrification technology may reduce an initial generation volume of all combustible and non-combustible low and intermediate-level radioactive waste generated from a nuclear power plant to 1/20 or less. This may significantly contribute to ensuring safety of radioactive waste disposal as well as to stable promotion of a disposal project for the construction of a management facility.

The radioactive waste vitrification facility 1 may vitrify the radioactive waste through the following schematic processes.

A glass raw material is put in an induction heating-type vitrification melter 30, and glass is melted by heat induced by an electromagnetic field. When molten glass of about 1100°C is created, finely crushed waste stored in the radioactive waste storage portion 20 is supplied to the molten glass through the radioactive waste supply device 10 and decomposed in the molten glass, and radioactive substances are tightly bonded to glass components. Examples of combustible waste that may be treated in the induction heating-type vitrification melter 30 include clothes, gloves, shoes, toilet paper, and the like, used by workers, a low-radioactive waste resin used for water purification at a nuclear power plant, and the like.

Radionuclides that have formed a glass structure may not escape from the glass structure under any environmental condition. The robustness of a bond between such a glass structure and radionuclides is confirmed through an internationally recognized leaching test.

Next, the radioactive waste supply device 10 according to an embodiment of the present disclosure will be described with reference to FIGS. 1 to 4.

The radioactive waste supply device 10 according to an embodiment of the present disclosure is a device that supplies radioactive waste to the vitrification melter 30 of the radioactive waste vitrification facility 1. Referring to FIGS. 2 and 3, the radioactive waste supply device 10 according to the present disclosure may include a main supply pipe 100, a sub-supply pipe 200, and a radioactive waste dispersing portion 300.

The main supply pipe 100 may include one end 101 and the other end 102, and may supply the radioactive waste from the other end 102 toward the one end 101, the one end 101 facing the vitrification melter 30. The main supply pipe 100 constitutes a main body of the radioactive waste supply device 10, and may have a housing structure with an empty center so that the radioactive waste introduced into the other end 102 may be moved toward the one end 101. The main supply pipe 100 may be made of, for example, stainless steel so that corrosion caused by external air may be minimized.

The sub-supply pipe 200 may be positioned inside the main supply pipe 100.

The sub-supply pipe 200 may include one side 201 and the other side 202, and may be disposed so that the one side 201 is adjacent to the one end 101 of the main supply pipe 100. That is, the sub-supply pipe 200 may be disposed in the main supply pipe 100 adjacent to the vitrification melter 30.

The sub-supply pipe 200 may have a housing structure with an empty center so that the radioactive waste supplied to the main supply pipe 100 may be moved to the vitrification melter 30. In addition, the sub-supply pipe 200 may be made of, for example, stainless steel so that corrosion caused by external air may be minimized.

The sub-supply pipe 200 may rotate within the main supply pipe 100. The radioactive waste passing through the main supply pipe 100 and the sub-supply pipe 200 accumulates on inner diameters of the main supply pipe 100 and the sub-supply pipe 200, such that the main supply pipe 100 and the sub-supply pipe 200 may be clogged with the radioactive waste, but by rotating the sub-supply pipe 200, the accumulation of the radioactive waste within the main supply pipe 100 and the sub-supply pipe 200 may be prevented.

Referring to FIGS. 3 and 4, in order to rotate the sub-supply pipe 200, the sub-supply pipe 200 may include a first gear portion 211. The first gear portion 211 may be positioned on the other side 202 of the sub-supply pipe 200. The first gear portion 211 may be engaged with a second gear portion 152 to be described later to receive power, and accordingly, the sub-supply pipe 200 may be rotated.

Meanwhile, the main supply pipe 100 may include the second gear portion 152 engaged with and connected to the first gear portion 211. The second gear portion 152 may provide power to the first gear portion 211 so that the sub-supply pipe 200 may be rotated.

Referring to FIG. 4, the first gear portion 211 and the second gear portion 152 may be configured as bevel gears, for example. The bevel gear is a conical gear used to transfer motion between two axes that intersect each other. The first gear portion 211 may be a ring gear, and the second gear portion 152 may be a pinion gear.

Meanwhile, the radioactive waste supply device 10 according to the present disclosure may further include a driving motor 150 providing power to the second gear portion 152. The driving motor 150 may provide rotational power to the second gear portion 152. Accordingly, the second gear portion 152 may rotate based on a horizontal axis. The first gear portion 211 vertically engaged with the second gear portion 152 receives rotational power from the second gear portion 152 and converts rotational power based on the horizontal axis into rotational power based on a vertical axis. Accordingly, the sub-supply pipe 200 including the first gear portion 211 may rotate based on the vertical axis.

Meanwhile, the main supply pipe 100 may further include a bearing portion 160 so that the vertical supply pipe 200 may be easily rotated while being fixed and disposed within the main supply pipe 100. To this end, the bearing portion 160 may be in contact with an outer diameter of the sub-supply pipe 200 while being positioned on the inner diameter of the main supply pipe 100. A shaft of the sub-supply pipe 200 that rotates may be fixed at a certain position by the bearing portion 160. In addition, the bearing portion 160 may support a self weight of the shaft and a load applied to the shaft, and may rotate the shaft of the sub-supply pipe 200.

The radioactive waste dispersing portion 300 may be positioned on the one side 201 of the sub-supply pipe 200, and may allow the radioactive waste passing through the sub-supply pipe 200 to be dispersed and injected into the vitrification melter 30.

The dispersing portion 300 may include a dispersing structure 301 and a support portion 302 extending from the dispersing structure 301 and fixed to the inner diameter of the sub-supply pipe 200. The number of support portions 302 may be plural.

In this case, the support portion 302 may be fixed to the inner diameter of the sub-supply pipe 200 so that the dispersing structure 301 is positioned at a central portion of the sub-supply pipe 200. The dispersing structure 301 and the support portion 302 may be made of stainless steel.

The radioactive waste supply device 10 may further include a permanent observation portion 120 for observing a supply state of the radioactive waste. The permanent observation portion 120 may include a first glass window 111 positioned on a side portion of the main supply pipe 100 and a first observation camera 121 capable of observing the inside of the main supply pipe 100 through the first glass window 111, so as to observe the supply state of the radioactive waste. Accordingly, the permanent observation portion 120 may monitor a state of the radioactive waste supplied by the radioactive waste supply device 10 in real time.

Meanwhile, the radioactive waste supply device 10 may further include an auxiliary observation portion 130 for more closely observing the supply state of the radioactive waste. The auxiliary observation portion 130 may include a second glass window 112 positioned on the other end 102 of the main supply pipe 100 and a second observation camera 122 capable of observing the inside of the main supply pipe 100 through the second glass window 112, so as to more closely observe the supply state of radioactive waste together with the permanent observation portion 120. Accordingly, the auxiliary observation portion 130 may monitor the state of the radioactive waste supplied by the radioactive waste supply device 10 in real time together with the permanent observation portion 120.

The embodiments of the present disclosure have been described hereinabove with reference to the accompanying drawings, but it will be understood by one of ordinary skill in the art to which the present disclosure pertains that various modifications and alterations may be made without departing from the technical spirit or essential feature of the present disclosure. Therefore, it is to be understood that the embodiments described above are illustrative rather than being restrictive in all aspects.

## Claims

1. A radioactive waste supply device that supplies radioactive waste to a vitrification melter, comprising:
a main supply pipe including one end and the other end and supplying the radioactive waste from the other end toward the one end, the one end facing the vitrification melter;
a sub-supply pipe including one side and the other side and disposed in the main supply pipe so that the one side is adjacent to the one end; and
a dispersing portion positioned on the one side of the sub-supply pipe and allowing the radioactive waste passing through the sub-supply pipe to be dispersed and injected into the vitrification melter.

2. The radioactive waste supply device of claim 1, wherein the dispersing portion includes a dispersing structure and a support portion extending from the dispersing structure and fixed to an inner diameter of the sub-supply pipe.

3. The radioactive waste supply device of claim 2, wherein the support portion is fixed to the inner diameter of the sub-supply pipe so that the dispersing structure is positioned at a central portion of the sub-supply pipe.

4. The radioactive waste supply device of claim 1, wherein the sub-supply pipe rotates within the main supply pipe.

5. The radioactive waste supply device of claim 4, wherein the sub-supply pipe includes a first gear portion positioned on the other side, and the main supply pipe includes a second gear portion providing power to the first gear portion.

6. The radioactive waste supply device of claim 5, wherein the first gear portion is a ring gear, and the second gear portion is a pinion gear.

7. The radioactive waste supply device of claim 5, further comprising a driving motor providing power to the second gear portion.

8. The radioactive waste supply device of claim 5, wherein the main supply pipe further includes a bearing portion, and the bearing portion is positioned on an inner diameter of the main supply pipe and is in contact with an outer diameter of the sub-supply pipe.

9. The radioactive waste supply device of claim 1, further comprising a permanent observation portion for observing a supply state of the radioactive waste,
wherein the permanent observation portion includes a first glass window positioned on a side portion of the main supply pipe and a first observation camera observing the inside of the main supply pipe through the first glass window.

10. The radioactive waste supply device of claim 1, further comprising an auxiliary observation portion for observing a supply state of the radioactive waste,
wherein the auxiliary observation portion includes a second glass window positioned on the other end of the main supply pipe and a second observation camera observing the inside of the main supply pipe through the second glass window.
